# EUROPÄISCHE PATENTANMELDUNG

(11) **EP 2 420 626 A1**
(43) Veröffentlichungstag der Anmeldung: **22.02.2012**
(21) Anmeldenummer: 11176177.1
(22) Anmeldetag: 01.08.2011
(51) Int. Cl.: E02F 9/22, A01B 63/00, B66F 9/22, F15B 1/02, F15B 11/16, B62D 5/07

(54) **Hydraulische Anordnung**

(30) Priorität: 19.08.2010 DE 102010039509
(71) Anmelder: DEERE & COMPANY, Moline, Illinois 61265-8098 (US)
(72) Erfinder: Reck, Wolfgang, 67245 Lambsheim (DE); Seebode, Mario, 68199 Mannheim (DE); Hoppe, Ulrich, 68163 Mannheim (DE); Kazimiers, Thilo, 01819 Bahretal (DE); Bitter, Marcus, Mannheim, 68199 (US); Peters, Josef, 68161 Mannheim (DE)
(74) Vertreter: Holst, Sönke

(57) **Zusammenfassung**

Es wird eine hydraulische Anordnung (10) für eine mobile Arbeitsmaschine offenbart. Die hydraulische Anordnung (10) umfasst eine Hydraulikpumpe (12), eine Lenkventileinrichtung (16), einen von der Lenkventileinrichtung (16) ansteuerbaren Lenkaktuator (18), eine sich zwischen Hydraulikpumpe (12) und Lenkventileinrichtung (16) erstreckende erste Hydraulikleitung (20) und einen über eine zweite Hydraulikleitung (22) mit der ersten Hydraulikleitung (20) verbundenen Hydraulikspeicher (24). Um einen Druckzustand für die hydraulische Anordnung (10) bei vorhandenem Hydrauliktank (24) zu optimieren wird vorgeschlagen, dass in der zweiten Hydraulikleitung (22) eine Drossel oder Blende (28) und ein dazu parallel angeordnetes und in Richtung des Hydraulikspeichers (24) schließendes Rückschlagventil (26) angeordnet ist.

## Beschreibung

Die Erfindung betrifft eine hydraulische Anordnung für eine mobile Arbeitsmaschine, mit einer Hydraulikpumpe, einer Lenkventileinrichtung, einem von der Lenkventileinrichtung ansteuerbaren Lenkaktuator, einer sich zwischen Hydraulikpumpe und Lenkventileinrichtung erstreckenden ersten Hydraulikleitung und einem über eine zweite Hydraulikleitung mit der ersten Hydraulikleitung verbundenen Hydraulikspeicher.

Es ist bekannt Lenkeinrichtungen für mobile Arbeitsmaschinen, wie beispielsweise landwirtschaftliche Schlepper, Erntemaschinen oder Baumaschinen, hydraulisch gesteuert auszubilden. Üblicherweise sind derartige Arbeitsmaschinen neben der hydraulischen Lenkeinrichtung mit weiteren hydraulischen Einrichtungen, wie Bremsanlagen, Federungen, Kraftheber, Hydraulikmotoren etc. bestückt, die über eine hydraulische Hauptversorgungspumpe hydraulisch versorgt werden. Die Steuerung mehrerer hydraulischer Einrichtungen mit nur einer hydraulischen Hauptversorgungspumpe erfolgt über sogenannte Prioritätssteuerventile, die lastdruckabhängig angesteuert werden (Load-Sensing (LS) - Steuerung) und gewährleisten, dass bei hohen hydraulischen Gesamtlasten keine hydraulische Unterversorgung sicherheitsrelevanter Einrichtungen, wie beispielsweise Bremsanlage oder auch Lenkeinrichtung, eintreten kann. Eine in der Regel relativ komplexe und umfangreiche Verschaltung derartiger Prioritätssteuerventile, sowie eine notwendigerweise großvolumige Auslegung von Hauptversorgungspumpen können in bestimmten Betriebszuständen zu Lasten von Reaktionszeiten der hydraulischen Komponenten gehen. So erfordern großvolumige Hydraulikpumpen größere Prioritätssteuerventile, die wiederum langsamere Ansprechzeiten besitzen. Je höher die Anzahl der verschiedenen hydraulischen Verbraucher bzw. Einrichtungen umso umfangreicher fällt das Prioritätssteuersystem bzw. die lastdruckabhängigen Steuerdruckleitungen. Damit verbunden, sind zum einen längere Steuerdruckleitungen sowie eine höhere Anzahl derselben. Beides wirkt sich negativ auf die Ansprechzeit bzw. das Reaktionsvermögen der gesamten hydraulischen Anordnung aus. Wenn ein Prioritätssteuerventil und/oder eine druckerzeugende Hydraulikpumpe nicht schnell genug reagieren, kann dies, in Bezug auf eine hydraulische Lenkeinrichtung, von einem Bediener des Fahrzeugs als ein kurzes Haken der Lenkung (Lenkunterbrechung) bemerkt und als störend empfunden werden. Nachteilig kommt hinzu, dass an einigen mobilen Arbeitsmaschinen mit hohem Volumenstrombedarf, insbesondere Baumaschinen, aus Gründen der Versorgungsstabilität die Pumpenreaktionszeiten verlangsamt werden, was ebenso zu einer Verlangsamung der Lenkungsreaktionen führen kann, wenn schnell hoher Druck und Volumenstrom von der Lenkung benötigt wird.

Die Ansprechzeiten bzw. Reaktionszeiten zum generellen Druckaufbau einer oben genannten hydraulischen Anordnung sind sowohl bei Systemen mit Zahnradpumpen (Konstantpumpen) als auch mit Verstellpumpen (variabel) als kritisch für eine Lenkeinrichtung zu sehen, da eine hydraulische Lenkeinrichtung in ihrer Reaktionszeit immer durch die druckerzeugende Komponente begrenzt sein wird, weshalb schnelle Reaktionszeiten erwünscht sind, die wiederum zu Instabilitäten der hydraulischen Anordnung bzw. der einzelnen hydraulischen Einrichtungen beitragen können.

Hersteller von Prioritätssteuerventilen bemühen sich, mit Hilfe von optimierten Steuerkanten und Einsatz von hydraulischen Blenden an ihren Ventilen die Reaktionszeiten zu optimieren. Andere Lösungen sehen die Verwendung einer zweiten oder mehrerer Versorgungspumpen vor, wobei eine separate Versorgungspumpe zur ausschließlichen Versorgung oder auch zur zusätzlichen Versorgung für eine Lenkeinrichtung bei hydraulischer Unterversorgung vorgeschlagen wird, was jedoch mit zusätzlichen Kosten, bzw. Teile- und Bauaufwand verbunden ist.

Ferner ist es bekannt, einer hydraulischen Unterversorgung der Lenkeinrichtung damit entgegenzuwirken, dass ein vorgefüllter Hydraulikspeicher vorgesehen ist, der sich bei Bedarf entsprechend entlädt und eine hydraulische Unterversorgung aufhebt. So offenbart die EP 1293669 A2 eine hydraulische Anordnung für eine Lenkeinrichtung mit einem Hydraulikspeicher, der an eine Lenkpumpe und an einen Lenkaktuator angeschlossen ist, wobei das spezifische Fördervolumen der Lenkpumpe so bemessen ist, dass der Betrieb des Lenkaktuators bei geringen Betriebsdrehzahlen des Verbrennungsmotors das Einspeisen von Druckmittel aus der Lenkpumpe und dem Hydraulikspeicher erfordert. Erst bei Überschreiten einer bestimmten Betriebsdrehzahl kann der Hydraulikbedarf der Lenkeinrichtung allein aus der Lenkpumpe gedeckt werden.

Eine derartige Anordnung des Hydraulikspeichers wirkt zwar einer hydraulischen Unterversorgung entgegen, ist jedoch nachteilig zum einen mit einer Verzögerung des gesamten Druckaufbaus verbunden und zum anderen damit, dass sich insgesamt ein "schwammiger", schwankender bzw. elastischer Druckzustand für die gesamte Lenkeinrichtung einstellt.

Die der Erfindung zugrunde liegende Aufgabe wird darin gesehen, eine hydraulische Anordnung der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine hydraulische Anordnung der eingangs genannten Art derart ausgebildet, dass in der zweiten Hydraulikleitung eine Drossel oder Blende und ein dazu parallel angeordnetes und in Richtung des Hydraulikspeichers schließendes Rückschlagventil angeordnet ist. Zum einen ermöglicht eine derartige Anordnung, dass bei eintretender hydraulischer Unterversorgung der Lenkeinrichtung eine schnelle Entladung des Hydraulikspeichers erfolgt und damit das Reaktionsvermögen der hydraulischen Lenkeinrichtung verbessert wird und zum anderen wird gewährleistet, dass sich der Hydraulikspeicher während einer Lenkbewegung nur langsam auflädt, so dass keine wesentliche Verzögerung des Druckaufbaus eintritt und sich insgesamt die Stabilität des Druckzustands verbessert bzw. sich insgesamt ein relativ stabiler bzw. relativ gleichförmiger Druckzustand einstellt. Insbesondere wird dadurch vermieden, dass sich der Hydraulikspeicher zu schnell aufladen kann und dadurch ein Druckabfall entsteht. Die angeordnete Blende oder Drossel, die in Verbindung mit dem angeordneten Rückschlagventil für eine langsame Aufladung des Hydraulikspeichers sorgt, kann dabei auch durch andere gleichartige, den Volumenstrom reduzierende Mittel ersetzt werden. Das angeordnete Rückschlagventil ermöglicht in Richtung der Lenkeinrichtung ein schnelles Entladen des Hydraulikspeichers im Falle einer hydraulischen Unterversorgung, wobei andersherum, zum Laden des Hydraulikspeichers, der Volumenstrom ausschließlich durch die Blende bzw. Drossel geleitet wird. Auch hier können gegebenenfalls andere gleichartige hydraulische Mittel eingesetzt werden.

In der ersten Hydraulikleitung ist zwischen der Hydraulikpumpe und der zweiten Hydraulikleitung ein in Richtung der Hydraulikpumpe schließendes Rückschlagventil angeordnet ist. Das Rückschlagventil stellt sicher, dass eine Entladung des Hydraulikspeichers zur Folge hat, dass eine hydraulische Speisung nur in Richtung der Lenkeinrichtung stattfindet, so dass die durch eine Entladung des Hydraulikspeichers erzielbare Wirkung nicht durch eine Druckentspannung in Richtung anderer Komponenten der hydraulischen Anordnung gemindert wird. Auch hier können gegebenenfalls andere gleichartige hydraulische Mittel eingesetzt werden.

In der ersten Hydraulikleitung kann zwischen der Hydraulikpumpe und der zweiten Hydraulikleitung wenigstens ein Steuerventil angeordnet sein, welches eine separate Ansteuerung der Lenkeinrichtung, also eine von weiteren hydraulischen Einrichtungen oder Komponenten getrennte hydraulische Versorgungssteuerung ermöglicht.

Das Steuerventil kann dabei auch als Prioritätssteuerventil ausgebildet sein, durch welches die erste Hydraulikleitung neben der Lenkventileinrichtung mit weiteren hydraulischen Einrichtungen verbindbar ist. So kann das Prioritätssteuerventil Teil eines hydraulischen Prioritätssteuersystems sein, wobei sich dem Prioritätssteuerventil noch ein oder mehrere weitere Prioritätssteuerventile bzw. weitere hydraulische Einrichtungen oder Verbrauchern anschließen können. Beispielsweise können einem Prioritätsventil eine hydraulische Bremsanlage mit höherer Priorität als die Lenkeinrichtung oder andere Einrichtungen wie eine hydraulische Federung oder Kraftheber mit geringerer Priorität zugeordnet sein.

Die Hydraulikpumpe kann als variable Verstellpumpe ausgebildet sein. Alternativ kann auch eine Konstantpumpe, beispielsweise eine Zahnradpumpe vorgesehen sein, die in Verbindung mit zusätzlichen, den Volumenstrom ändernde Stellmittel, angeordnet wird.

Es können ferner lastdruckabhängige Steuerdruckleitungen vorgesehen sein, durch welche die Hydraulikpumpe lastdruckabhängig ansteuerbar ist. So kann bei wechselnden Lastdrücken bzw. sich änderndem Versorgungsbedarf an Hydraulikflüssigkeit, die Hydraulikpumpe entsprechend angesteuert und insgesamt der Volumenstrom für die gesamte hydraulische Anordnung lastdruckoptimiert gesteuert werden.

Ferner können auch lastdruckabhängige Steuerdruckleitungen vorgesehen sein, durch welche das wenigstens eine Steuerventil ansteuerbar ist. Diesbezüglich können auch entsprechend angeordnete Prioritätsventile eines Prioritätssteuersystems mit entsprechenden lastdruckabhängigen Steuerdruckleitungen verbunden sein, so dass der Volumenstrom für die gesamte hydraulische Anordnung lastdruckoptimiert gesteuert werden kann.

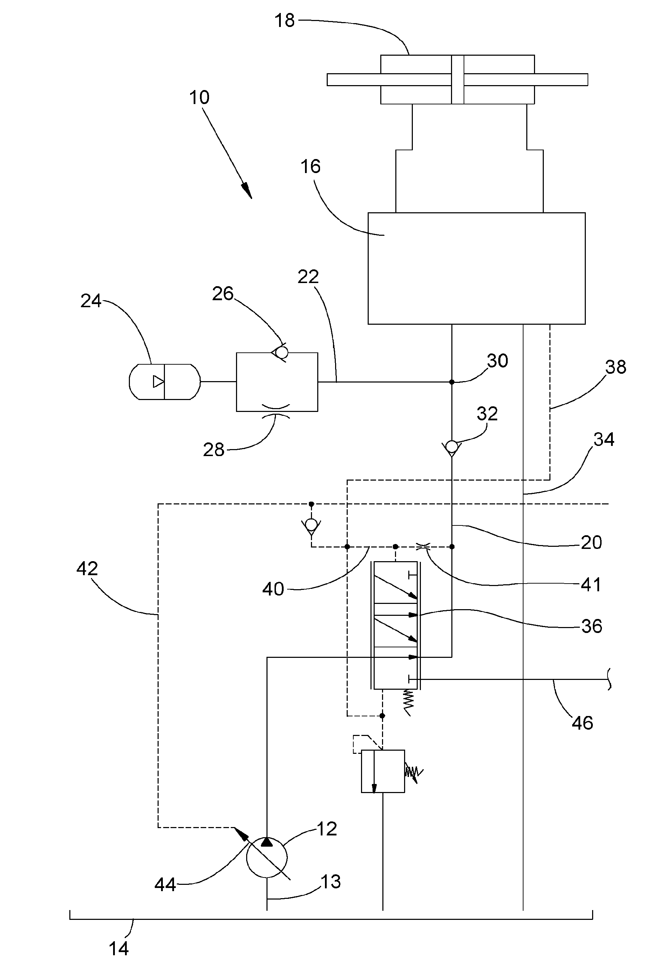

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt die einzige Figur in der Zeichnung einen schematischen Schaltplan einer erfindungsgemäßen hydraulischen Anordnung.

Die dargestellte erfindungsgemäße hydraulische Anordnung 10 ist für mobile Arbeitsmaschinen einsetzbar. Dazu gehören beispielsweise landwirtschaftliche Fahrzeuge, wie Schlepper, Erntemaschinen, selbstfahrende Spritzmaschinen, Lademaschinen, insbesondere Teleskoplader, aber auch Baumaschinen wie Radlader oder Bagger etc, sowie Forstmaschine. Insbesondere verfügen derartige Maschinen über mehrere hydraulische Einrichtungen bzw. Verbraucher, die über nur eine hydraulische Versorgungspumpe versorgt werden.

Die in der einzigen Figur dargestellte hydraulische Anordnung 10 umfasst eine Hydraulikpumpe 12 (hier als variable Verstellpumpe ausgebildet), welche über eine Versorgungsleitung 13 aus einem Hydrauliktank 14 speist, und eine Lenkventileinrichtung 16 zur Ansteuerung eines Lenkaktuators 18. Die Lenkventileinrichtung 16 ist über eine erste Hydraulikleitung 20 mit der Hydraulikpumpe 12 verbunden. Eine zweite Hydraulikleitung 22 verbindet die erste Hydraulikleitung 20 mit einem Hydraulikspeicher 24, wobei in der zweiten Hydraulikleitung 22 ein in Richtung des Hydraulikspeichers schließendes Rückschlagventil 26 und dazu parallel eine Drossel oder Blende 28 angeordnet ist. Zwischen einer Verbindungsstelle 30, an der die zweite Hydraulikleitung 22 mit der ersten Hydraulikleitung 20 verbunden ist, ist ein weiteres Rückschlagventil 32 angeordnet, welches in Richtung der Hydraulikpumpe 12 schließt. Eine weitere Hydraulikleitung 34 verbindet die Lenkventileinrichtung mit dem Hydrauliktank 14. Ferner ist in der ersten Hydraulikleitung 20 zwischen dem weiteren Rückschlagventil 32 und der Hydraulikpumpe 12 ein als Prioritätssteuerventil ausgebildetes Steuerventil 36 vorgesehen, welches in bekannter Weise über mit der Lenkventileinrichtung 16 und der ersten Hydraulikleitung 20 verbundene Lastdrucksteuerleitungen 38, 40, angesteuert wird, wobei in der Lastdrucksteuerleitung 40, zwischen Steuerventil 36 und der Verbindung zur Hydraulikleitung 20 eine Blende 41 angeordnet ist. Eine weitere Lastdrucksteuerleitung 42 zweigt von den oben genannten Lastdrucksteuerleitungen 38, 40 ab und führt zu einer entsprechenden Stelleinrichtung 44 zur lastdruckabhängigen Einstellung eines von der Hydraulikpumpe 12 gelieferten Volumenstroms. Eine weitere Hydraulikleitung 46 verbindet das Prioritätssteuerventil 36 in üblicher, bekannter Weise mit weiteren hydraulischen Einrichtungen bzw. Komponenten (nicht gezeigt), wie beispielsweise einer hydraulischen Bremsanlage, einer hydraulischen Federung, einem hydraulischen Krafthebersystem oder einer anderen hydraulischen Einrichtung der Arbeitsmaschine.

Die hydraulische Anordnung ist demnach derart ausgebildet, dass Hydraulikflüssigkeit aus dem Tank 14 über die Hydraulikpumpe 12 und über das Prioritätssteuerventil 36 zu der hydraulischen Lenkeinrichtung 16 gefördert wird. Gleichzeitig wird über die mit der Drossel bzw. Blende 28 bestückte zweite Hydraulikleitung 22 Hydraulikflüssigkeit in den Hydraulikspeicher 24 geleitet, welcher parallel zur Versorgung der hydraulischen Lenkeinrichtung 16 langsam mit Hydraulikflüssigkeit beladen wird. Durch Betätigen der hydraulischen Lenkeinrichtung 16 kann der Lenkaktuator 18 angesteuert werden, dessen Bewegung wiederum auf ein entsprechendes Lenkgestänge (nicht gezeigt) übertragen wird. Je nach Belastung der hydraulischen Anordnung 10 stellt sich über die Lastdruckleitungen 38, 40, 42 ein entsprechender Volumenstrom ein. Sollte es nunmehr aufgrund von Betriebszustandsänderungen zu einer Unterversorgung der hydraulischen Anordnung kommen, derart, dass der Volumenstrom bzw. der Hydraulikdruck abfällt, so wird der hydraulische Druckabfall bzw. die hydraulische Unterversorgung automatisch aufgefangen, indem sich der Hydraulikspeicher 24 über das Rückschlagventil 26 in Richtung der hydraulischen Lenkeinrichtung 16 entlädt. Gleichzeitig wird durch das zweite Rückschlagventil 32 verhindert, dass die im Hydraulikspeicher 24 gespeicherte Hydraulikflüssigkeit auch nur in Richtung der hydraulischen Lenkeinrichtung 16 abfließen kann.

## Patentansprüche

1. Hydraulische Anordnung (10) für eine mobile Arbeitsmaschine, mit einer Hydraulikpumpe (12), einer Lenkventileinrichtung (16), einem von der Lenkventileinrichtung (16) ansteuerbaren Lenkaktuator (18), einer sich zwischen Hydraulikpumpe (12) und Lenkventileinrichtung (16) erstreckenden ersten Hydraulikleitung (20) und einem über eine zweite Hydraulikleitung (22) mit der ersten Hydraulikleitung (20) verbundenen Hydraulikspeicher (24), **dadurch gekennzeichnet, dass** in der zweiten Hydraulikleitung (22) eine Drossel oder Blende (28) und ein dazu parallel angeordnetes und in Richtung des Hydraulikspeichers (24) schließendes Rückschlagventil (26) angeordnet ist.

2. Hydraulische Anordnung (10) nach Anspruch 1, **dadurch gekennzeichnet, dass** in der ersten Hydraulikleitung (20) zwischen der Hydraulikpumpe (12) und der zweiten Hydraulikleitung (22) ein in Richtung der Hydraulikpumpe (12) schließendes Rückschlagventil (32) angeordnet ist.

3. Hydraulische Anordnung (10) nach Anspruch 1 oder 2,
**dadurch gekennzeichnet, dass** in der ersten Hydraulikleitung (20) zwischen der Hydraulikpumpe (12) und der zweiten Hydraulikleitung (22) ein Steuerventil (36) angeordnet ist.

4. Hydraulische Anordnung (10) nach Anspruch 3, **dadurch gekennzeichnet, dass** das Steuerventil (36) als Prioritätssteuerventil ausgebildet ist, durch welches die erste Hydraulikleitung (20) neben der Lenkventileinrichtung (16) mit weiteren hydraulischen Einrichtungen verbindbar ist.

5. Hydraulische Anordnung (10) nach einem der vorhergehenden Ansprüche, **dadurch gekennzeichnet, dass** die Hydraulikpumpe (12) als variable Verstellpumpe ausgebildet ist.

6. Hydraulische Anordnung (10) nach einem der vorhergehenden Ansprüche, **dadurch gekennzeichnet, dass** lastdruckabhängige Steuerdruckleitungen (38, 40, 42) vorgesehen sind, durch welche die Hydraulikpumpe lastdruckabhängig ansteuerbar ist.

7. Hydraulische Anordnung (10) nach einem der Ansprüche 3 bis 5, **dadurch gekennzeichnet, dass** lastdruckabhängige Steuerdruckleitungen (38, 40, 42) vorgesehen sind, durch welche das Steuerventil (36) ansteuerbar ist.
